# EUROPÄISCHE PATENTSCHRIFT

(11) **EP 2 504 537 B1**
(45) Veröffentlichungstag und Bekanntmachung des Hinweises auf die Patenterteilung: **25.03.2015**
(21) Anmeldenummer: 10762911.5
(22) Anmeldetag: 04.10.2010
(51) Int. Cl.: F01N 3/20

(54) **VORRATSTANK FÜR EIN REDUKTIONSMITTEL**
RESERVOIR TANK FOR A REDUCING AGENT
RÉSERVOIR DE STOCKAGE POUR UN AGENT DE RÉDUCTION

(30) Priorität: 23.11.2009 DE 102009046969
(43) Veröffentlichungstag der Anmeldung: 03.10.2012
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2010/064702
(87) Internationale Veröffentlichungsnummer: WO 2011/060994

(56) Entgegenhaltungen:
- EP-A1- 2 093 397
- DE-A1-102006 046 899

## Beschreibung

### Technisches Gebiet

Die Erfindung betrifft einen Vorratstank für ein Reduktionsmittel, insbesondere eine wässrige Harnstofflösung zur Nachbehandlung von Abgasen aus einem Verbrennungsmotor, umfassend einen Außenbehälter und einen topfförmigen Innenbehälter, der ein Teilvolumen des Volumens des Außenbehälters begrenzt, ein Heizelement, das in den Innenbehälter eingesetzt ist, und eine Entnahmevorrichtung zur Entnahme des Reduktionsmittels.

### Stand der Technik

Aufgrund stetig steigender gesetzlicher Anforderungen an die Emissionswerte von Verbrennungsmotoren werden zur Einhaltung der vorgegebenen Grenzwerte die Abgase aus Verbrennungsmotoren einer Nachbehandlung unterzogen. Zur Reduzierung des Stickoxidausstosses, insbesondere bei Dieselmotoren, werden Reduktionskatalysatoren eingesetzt, mittels derer die Stickoxid-Emissionen (NOₓ) deutlich abgesenkt werden können. Bevor die Abgase in den Katalysator gelangen, wird ihnen ein Reduktionsmittel zugeführt, wie beispielsweise eine wässrige Harnstofflösung, welche die Bildung von Ammoniak bewirkt, das wiederum mit den Stickoxiden im nachgeschalteten Katalysator zu harmlosem Stickstoff und Wasser reagiert. Die Zufuhr der wässrigen Harnstofflösung erfolgt über Dosiersysteme, die in der Regel einen Vorratstank zur Bevorratung des Rdeuktionsmittels, und ein Dosiermodul, wie beispielsweise eine Dosierpumpe oder ein Dosierventil, umfassen. Ferner bedarf es eines Fördermoduls, um das im Vorratstank bevorratete Reduktionsmittel dem Dosiermodul zuzuführen.

Der zur Bevorratung des Reduktionsmittels vorgesehene Vorratstank ist in der Regel derart am Fahrzeug angeordnet, dass das hierin enthaltene Reduktionsmittel den Außentemperaturen ausgesetzt ist. Da die wässrige Harnstofflösung bei Temperaturen unter -11 °C gefriert, ist der Vorratstank mit einem Heizelement ausgestattet, das ein Einfrieren verhindert bzw. ein Auftauen von bereits gefrorenem Reduktionsmittel bewirken soll. Bei dem Heizelement kann es sich beispielsweise um eine elektrische Heizung handeln. Besonders vorteilhaft lassen sich beispielsweise bei hohen Temperaturen selbst abregelnde PTC-Heizelemente (Positive Temperature Coefficient), die in einen flächigen Trägerkörper integriert sind, als Heizelemente einsetzen. Unabhängig von der konkreten Ausführung des Heizelements wird dieses bevorzugt im Bodenbereich eines in den Tank eingesetzten topfförmigen Behälters angeordnet, der sicherstellen soll, dass auch bei geringem Füllstand das Heizelement von einer ausreichenden Menge Reduktionsmittel umgeben ist.

Ein Vorratstank der vorstehend genannten Art geht beispielsweise aus der Offenlegungsschrift DE 10 2006 046 899 A1 hervor. Der Vorratstank umfasst einen Außenbehälter, einen Innenbehälter sowie ein Heizelement, das im Innenbehälter aufgenommen ist. Ferner umfasst der Vorratstank eine Entnahmevorrichtung, mittels derer das flüssige Reduktionsmittel dem Tank entnommen werden kann. Dabei ist der Innenbehälter mit dem Außenbehälter derart verbunden, dass flüssiges Reduktionsmittel aus dem Innenbehälter in den Außenbehälter strömen kann. Das im Innenbehälter aufgenommene Heizelement bewirkt, dass bei niedrigen Umgebungstemperaturen gefrorenes Reduktionsmittel aufgetaut wird, welches aufgrund der fluidischen Verbindung beider Behälter in den Außenbehälter gelangt und dabei das Auftauen des hierin enthaltenen, noch gefrorenen Reduktionsmittels bewirkt. Um den Innenbehälter mit dem Außenbehälter fluidisch zu verbinden, wird weiterhin vorgeschlagen, den Innenbehälter mit mindestens einem Durchbruch zu versehen, durch welchen Flüssigkeit aus dem Außenbehälter in den Innenbehälter und umgekehrt strömen kann.

Da das gefrorene Reduktionsmittel im Unterschied zum flüssigen Reduktionsmittel eine deutlich höhere Wärmeleitfähigkeit besitzt, bewirkt das aus dem Innenbehälter über die Durchbrüche austretende flüssige Reduktionsmittel, dass sich die Wärme im Eisvolumen des Außenbehälters verteilt bzw. verliert, so dass das im Innenbehälter angeordnete Heizelement lediglich ein Auftauen des im Innenbehälter vorhandenen gefrorenen Reduktionsmittels zu bewirken vermag. Besondes kritisch wirkt sich dies aus, wenn der Füllstand sehr niedrig und/der der Tank sehr flach ist. Ggf. liegt dann keine ausreichende Menge flüssigen Reduktionsmittels zur geforderten Abgasnachbehandlung vor. Das Fahrzeug muss dann unter Umständen stillgelegt werden.

Der Erfindung liegt daher die Aufgabe zugrunde, einen Vorratstank für Reduktionsmittel der vorstehend genannten Art bereitzustellen, der einen wirkungsgradoptimierten Einsatz eines Heizelementes ermöglicht. Der vorgeschlagene Vorratstank soll zudem flachbauend ausführbar sein.

Die Aufgabe wird gelöst durch einen Vorratstank mit den Merkmalen des Anspruchs 1. Vorteilhafte Weiterbildungen der Erfindung werden in den Unteransprüchen angegeben.

### Offenbarung der Erfindung

Der vorgeschlagene Vorratstank weist einen Außenbehälter und einen topfförmigen Innenbehälter auf, wobei der Innenbehälter ein Teilvolumen des Volumens des Außenbehälters begrenzt. Erfindungsgemäß ist der topfförmige Innenbehälter im Bodenbereich von einem Isolierkragen umgeben, der einen ersten, an die Außenumfangsfläche des Innenbehälters herangeführten Schenkel und einen zweiten, an der Bodenfläche des Außenbehälters anliegenden Schenkel umfasst, so dass der Isolierkragen ein weiteres Teilvolumen des Volumens des Außenbehälters begrenzt. Bei Außentemperaturen unter -11°C bewirkt das im topfförmigen Innenbehälter angeordnete Heizelement, dass zunächst das Reduktionsmittel auftaut, das das Heizelement unmittelbar umgibt. Die über das Heizelement eingetragene Wärme wird über das im Innenbehälter enthaltene Reduktionsmittel an das übrige Teilvolumen des Innenbehälters übertragen, so dass auch das hierin enthaltene restliche gefrorene Reduktionsmittel aufgetaut wird. Das wieder flüssige Reduktionsmittel gelangt vom ersten Teilvolumen in das weitere durch den Isolierkragen begrenzte Teilvolumen, so dass über das bereits getaute Reduktionsmittel Wärme in das zweite Teilvolumen eingetragen wird. Der Wärmefluss in axialer und radialer Richtung wird erst durch den Isolierkragen gestoppt, der das zweite Teilvolumen begrenzt. Der Isolierkragen verhindert somit, dass die von der Heizung abgegebene Wärme nicht unkontrolliert an das große tankseitige Eisvolumen abgegeben wird. Denn dieses würde sich dabei nur um wenige Grade erwärmen, nicht jedoch auftauen.

Vorzugsweise stehen beide, durch den Innenbehälter und den Isolierkragen begrenzte Teilvolumina über axiale und/oder radiale Durchbrüche fluidisch in Verbindung, so dass durch bereits aufgetautes und aus dem Innenbehälter austretendes Reduktionsmittel der Wärmefluss in beiden Teilvolumina gefördert wird.

Weiterhin vorzugsweise sind beide Teilvoumina in horizontaler Richtung zentriert und in vertikaler Richtung in der Nähe der Bodenfläche des Außenbehälters angeordnet. Durch diese Maßnahme wird ebenfalls der Wirkungsgrad des Heizelements erhöht, da auch bei niedrigem Füllstand des Vorratstanks das im Innenbehäter angeordnete Heizelement von einer ausreichenden Menge gefrorenen Reduktionsmittels umgeben ist. Das Heizelement ist daher ebenfalls bevorzugt im Bodenbereich des Innenbehälters angeordnet. Da der Bodenbereich des Innenbehälters durch den umlaufend angeordneten Isolierkragen gedämmt wird, wird auch der über die Wandung des Innenbehälters stattfindende Wärmefluss deutlich reduziert. Bei dem Heizelement handelt es sich bevorzugt um eine PTC-Heizelemente einsetzende elektrische Heizung, die flächig ausgeführt und demnach liegend im Bodenbereich des Innenbehälters angeordnet sein kann.

Vorteilhafterweise bestehen der Innenbehälter und/oder der Isolierkragen aus einem Werkstoff, der eine Wärmeleitfähigkeit kleiner 0,5 W/(mK) besitzt. Der Werkstoff ist vorzugsweise ein Kunststoff. Somit weist zumindest der Isolierkragen eine Wärmeleitfähigkeit auf, die deutlich geringer als die des gefrorenen Reduktionsmittels ist. Vorteilhafterweise besteht auch der Innenbehälter aus einem entsprechenden Material, um eine Übertragung der Wärme vom InnenbehälterTeilvolumen auf das Außenbehältervolumen zu reduzieren.

Um den Wärmefluss im Teilvolumen zu verstärken, der durch den Isolierkragen begrenzt wird, wird gemäß einer Weiterbildung der Erfindung vorgeschlagen, dass in diesem Teilvolumen wenigstens ein Wärmeleitblech angeordnet ist, das vorzugsweise aus Edelstahl besteht. Die Wärmeleitfähigkeit eines Wärmeleitblechs aus Edelstahl liegt bei etwa 14 W/(mK), so dass die Wärmeleitfähigkeit deutlich oberhalb der Wärmeleitfähigkeit des Isolierkragens sowie oberhalb des gefrorenen Reduktionsmittels (Wärmeleitfähigkeit etwa zwischen 2-3 W/(mK) liegt. Insbesondere bei einer flachen Bauform des Vorratstanks ist das wenigstens eine Wärmeleitblech vorzugsweise horizontal ausgerichtet, um einen verbesserten Wärmefluss vom Zentrum nach außen zu bewirken. Vorteilhafterweise sind mehrere Wärmeleitbleche in horizontaler Lage umlaufend um den Innenbehälter zur gleichmäßigen Wärmeverteilung angeordnet.

Gemäß einer bevorzugten Ausführungsform ist in der Bodenfläche des Außenbehälters eine als Sumpf dienende Vertiefung ausgebildet. In den Sumpf mündet dann auch die Entnahmevorrichtung. Dadurch ist gewährleistet, dass auch bei Schräglage des Tanks, bei Kurvenfahrten und/oder und/oder bei niedrigem Füllstand an der Mündungsöffnung der Entnahmevorrichtung flüssiges Reduktionsmittel in ausreichender Menge zur Verfügung steht.

Des Weiteren wird vorgeschlagen, dass die Entnahmevorrichtung eine Sauglanze ist, deren Ansaugöffnung in Bodennähe des Außenbehälters bzw. im Bereich des Sumpfes - sofern vorhanden - platziert ist. Der Sumpf kann vom Teilvolumen des Innenbehälters abgetrennt sein, indem die Bodenfläche des Innenbehälters beabstandet zur Bodenfläche des Außenbehälters angeordnet ist. In diesem Fall mündet die Entnahmevorrichtung vorzugsweise in dem von den beiden Bodenflächen begrenzten Zwischenraum. Hierzu wird die Entnahmevorrichtung durch eine Öffnung der Bodenfläche des Innenbehälters hindurchgeführt.

Um ein Aufschwimmen des Innenbehälters zu vermeiden, ist der Innenbehälter mit dem Außenbehälter über eine Schraub-, Steck-, Klemm- und/oder Rastverbindung lösbar verbunden. Um eine entsprechende Verbindung zu ermöglichen, ist der Innenbehälter bodenseitig mit einem zylinderförmigen Ansatz versehen, der mit einem ebenfalls bodenseitig angeordneten Aufnahmering des Außenbehälters in der Weise zusammenwirkt, dass eine formschlüssige Verbindung erzielt wird. Eine solche Verbindung kann beispielsweise auch eine Schraub- und Rastverbindung nach Art einer Bajonett-Verbindung ausgebildet sein. Auch in diesem Fall wirken ein zylinderförmiger Ansatz des Innenbehälters und ein bodenseitig am Außenbehälter angeordneter Aufnahmering in der Weise zusammen, dass ein Formschluss erzielt wird. Der Aufnahmering ist bei Ausbildung eines Sumpfes vorzugsweise innerhalb dieses Sumpfes angeordnet und mit der Bodenfläche des Sumpfes verschweißt.

Es sind Vorratstanks bekannt, deren Außenbehälter deckenseitig lediglich eine kleine Öffnung zum Einsetzen des Innenbehälters und/oder zur Revision aufweisen. In einem solchen Fall ist der Isolierkragen vorzugsweise segmentiert ausgebildet, um segmentweise durch die Öffnung in den Außenbehälter eingesetzt zu werden. Eine Verbindung der einzelnen Segmente erfolgt dann nach dem Einsetzen in den Außenbehälter. Die vorgeschlagene Art der Montage ist insbesondere für Nachrüstungen von bereits vorhandenen Vorratstanks interessant. Der erfindungsgemäß vorgeschlagene Isolierkragen kann beispielsweise als separater Bauteilsatz zur Nachrüstung angeboten werden.

Eine weitere vorteilhafte Maßnahme stellt eine zusätzliche Außendämmung des Außenbehälters dar. Vorzugsweise ist der Außenbehälter im Bodenbereich zumindest teileweise von außen wärmegedämmt. Der wärmegedämmte Teilbereich ist weiterhin vorzugsweise zentriert angeordnet und/oder um den Sumpf herum geführt.

Sämtliche vorstehend genannten Maßnahmen tragen einzeln oder in Kombinationen dazu bei, dass auch bei niedrigen Temperaturen flüssiges Reduktionsmittel stets in ausreichender Menge zur Entnahme und damit zur Abgasnachbehandlung zur Verfügung steht. Denn ein ungehinderter Wärmefluss, der das Eis nur erwärmen, nicht jedoch auftauen würde, wird durch den Isolierkragen wirkungsvoll unterbunden, zumindest jedoch deutlich verringert. Ein weiterer Vorteil des erfindungsgemäßen Vorratstanks besteht darin, dass aufgrund der an der Bodenfläche des Außenbehälters anliegenden Isolierplatte die Ansaugstelle unempfindlicher hinsichtlich Schwappbewegungen ist. Dies trägt ebenfalls dazu bei, dass an der Ansaugstelle stets eine ausreichende Menge flüssigen Reduktionsmittels vorhanden ist.

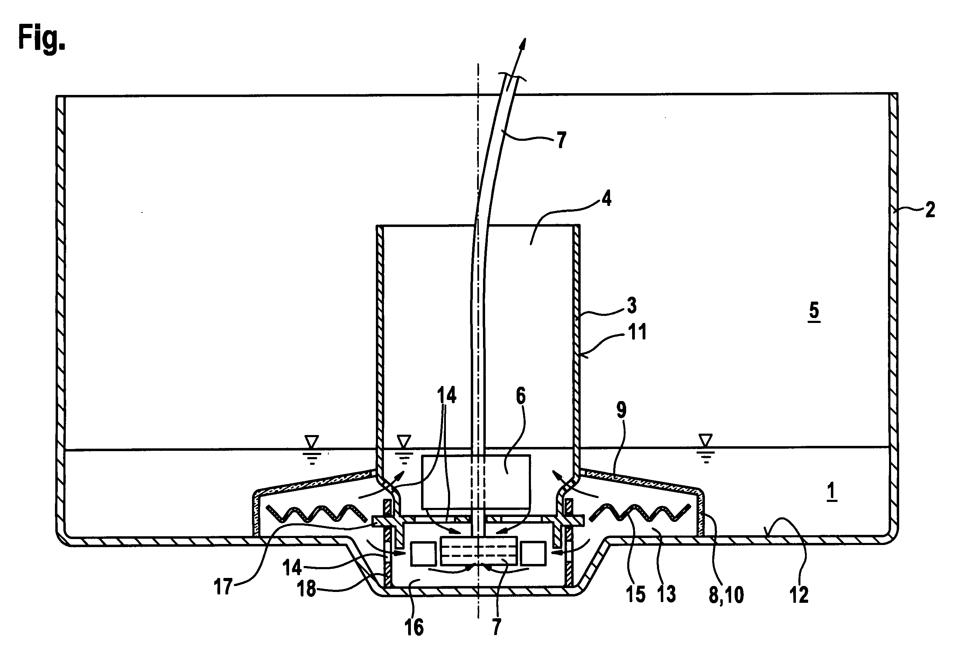

Ein konkretes Ausführungsbeispiel der vorliegenden Erfindung wird nachfolgend anhand der einzigen Figur näher beschrieben. Diese zeigt einen Schnitt durch einen erfindungsgemäßen Vorratstank.

### Ausführliche Beschreibung der einzigen Figur

Der dargestellte Vorratstank weist einen Außenbehälter 2 mit einem bodenseitigen, als Sumpf 16 ausgebildeten Vertiefung sowie einen Innenbehälter 3 auf, der ein Teilvolumen 4 aus dem Volumen 5 des Außenbehälters 2 begrenzt. Die Darstellung zeigt den Vorratstank bei niedrigem Füllstand, da ein im Innenbehälter 3 aufgenommenes Heizelement 6 nur geringfügig von Reduktionsmittel 1 überdeckt wird. Das Teilvolumen 4 kommuniziert mit dem Volumen 5, so dass der Füllstand in beiden Behältern 2, 3 gleich ist. Der Füllstand bzw. die Füllhöhe ist mit einem Pfeil angedeutet. Durch den Außenbehälter 2 und durch den Innenbehälter 3 ist eine Entnahmevorrichtung 7 in Form einer Sauglanze geführt, welche bis in den Sumpf 16 hineinreicht. Der Sumpf 16 wird oberhalb der Ansaugöffnung der Sauglanze durch den Boden des Innenbehälters 3 begrenzt, wobei der Boden Durchbrüche 14 aufweist, die das Teilvolumen 4 des Innenbehälters 3 und das sich bis in den Sumpf erstreckende Volumen 5 des Außenbehälters 2 fluidisch verbinden. Eine seitliche Begrenzung wird durch einen mit der Bodenfläche 12 des Außenbehälters 2 verschweißten Aufnahmering 18 geschaffen, der ebenfalls Durchbrüche 14 zur fluidischen Verbindung mit dem Restvolumen des Außenbehälters 2 aufweist. Der mit der Bodenfläche 12 verschweißte Aufnahmering 18 weist ferner Durchbrüche auf, in welche Rastnasen eines zylinderförmigen Ansatzes 17 des Innenbehälters 3 verrastend eingreifen. Somit sind der Innenbehälter 3 und der Außenbehälter 2 formschlüssig verbunden.

Um den radialen und/oder axialen Wärmefluss ausgehend vom Heizelement 6 im Innenbehälter 3 zu reduzieren und demzufolge eine bessere Auftauwirkung zu erzielen, ist um den Innenbehälter 3 herum ein Isolierkragen 8 angeordnet, der wenigstens einen ersten, bis dicht an die Außenumfangsfläche 11 des Innenbehälters 3 herangeführten Schenkel 9 sowie einen zweiten, an der Bodenfläche 12 des Außenbehälters 2 anliegenden Schenkel 10 umfasst. Der Isolierkragen 8 begrenzt somit ein weiteres Teilvolumen 13 im Außenbehälter 2, das sich um den Innenbehälter 3 herum erstreckt und sowohl mit dem Teilvolumen 4 des Innenbehälters 3, als auch mit dem Volumen 5 des Außenbehälters 2 fluidisch in Verbindung steht. Hierzu können beispielsweise im Isolierkragen 8 ebenfalls Durchbrüche 14 ausgebildet sein. Alternativ kann die Verbindung über einen geringfügigen radialen Abstand des Isolierkragens 8 zum Innenbehälter 3 hergestellt werden. Aufgrund des außenumfangseitig um den Innenbehälter 3 herum angeordneten Isolierkragens 8 gelangt aufgetautes, flüssiges Reduktionsmittel 1 aus dem Teilvolumen 4 des Innenbehälters 3 zunächst in das Teilvolumen 13, das radial und axial von dem Isolierkragen 8 begrenzt wird. Da der Isolierkragen 8 aus einem Werkstoff hergestellt ist, der eine geringe Wärmeleitfähigkeit besitzt, werden durch den Isolierkragen 8 der radiale und der axiale Wärmefluss deutlich reduziert. Der Wärmeeintrag konzentriert sich somit auf das Teilvolumen 4 des Innenbehälters 3 und auf das Teilvolumen 13, so dass sichergestellt ist, dass hierin vorhandenes gefrorenes Reduktionsmittel 1 aufgetaut wird und damit zur Abgasnachbehandlung zur Verfügung steht. Das übrige im Volumen 5 des Außenbehälters 2 vorhandene Reduktionsmittel bleibt ggf. gefroren. Eine oberhalb des Isolierkragens 8 verbleibende gefrorene Reduktionsmittelschicht erweist sich unter Umständen als vorteilhaft, da sie bei einer Kurvenfahrt verhindert, dass bereits aufgetaute Flüssigkeit weit nach außen geschleudert wird, dort gefriert und somit für das System nicht mehr verfügbar ist.

Der Darstellung ist ferner ein im Teilvolumen 13 angeordnetes Wärmeleitblech 15 zur entnehmen, dass sich von dem Innenbehälter 3 nach radial außen erstreckt. Die Anordnung solcher Wärmeleitbleche 15 verstärkt die auftauende Wirkung im Teilvolumen 13, so dass im Sumpf 16 um die Sauglanze herum flüssiges Reduktionsmittel 1 in ausreichender Menge zur Verfügung steht.

Um eine möglichst flache Bauform eines erfindungsgemäßen Vorratstanks zu erzielen, ist das Heizelement 6 vorzugsweise flächig ausgeführt und in Bodennähe des Innenbehälters 3 angeordnet. Ferner ist vorgesehen, dass auch der Isolierkragen 8 eine vorzugsweise flächige Form besitzt, die dadurch erreicht wird, dass der erste Schenkel 9 länger als der zweite Schenkel 10 ausgebildet ist. Der Wärmefluss erfolgt dann vorrangig in radialer Richtung, so dass auch bei niedrigem Füllstand eine ausreichende Menge des Reduktionsmittels 1 aufgetaut wird.

Der Isolierkragen 8 der dargestellten Ausführungsform begrenzt ein Teilvolumen von etwa 2 Litern. Hierzu besitzt der Isolierkragen eine Höhe von etwa 3 cm und einen Außendurchmesser von etwa 30 cm. Die Höhe des Isolierkragens sollte vorzgusweise 4 cm nicht überschreiten um insbesondere für den Einsatz in flachbauenden Tanks geeignet zu sein.

## Patentansprüche

1. Vorratstank für ein Reduktionsmittel (1), insbesondere eine wässrige Harnstofflösung zur Nachbehandlung von Abgasen aus einem Verbrennungsmotor, umfassend einen Außenbehälter (2) und einen topfförmigen Innenbehälter (3), der ein Teilvolumen (4) des Volumens (5) des Außenbehälters (2) begrenzt, ein Heizelement (6), das in den Innenbehälter (3) eingesetzt ist, und eine Entnahmevorrichtung (7) zur Entnahme des Reduktionsmittels (1), **dadurch gekennzeichnet,** dass der topfförmige Innenbehälter (3) im Bodenbereich von einem Isolierkragen (8) umgeben ist, der einen ersten, an die Außenumfangsfläche (11) des Innenbehälters (3) herangeführten Schenkel (9) und einen zweiten, an der Bodenfläche (12) des Außenbehälters (2) anliegenden Schenkel (10) umfasst, so dass der Isolierkragen (8) ein weiteres Teilvolumen (13) des Volumens (5) des Außenbehälters (2) begrenzt.

2. Vorratstank nach Anspruch 1,
**dadurch gekennzeichnet,** dass die beiden Teilvolumina (4, 13) über axiale und/oder radiale Durchbrüche (14) fluidisch in Verbindung stehen.

3. Vorratstank nach Anspruch 1 oder 2,
**dadurch gekennzeichnet,** dass die beiden Teilvolumina (4, 13) in horizontaler Richtung zentriert und in vertikaler Richtung in der Nähe der Bodenfläche (12) des Außenbehälters (2) angeordnet sind.

4. Vorratstank nach einem der vorhergehenden Ansprüche,
**dadurch gekennzeichnet,** dass der Innenbehälter (3) und/oder der Isolierkragen (8) aus einem Werkstoff bestehen, der eine Wärmeleitfähigkeit < 0,5 W/(mK) besitzt, wobei der Werkstoff vorzugsweise ein Kunststoff ist.

5. Vorratstank nach einem der vorhergenden Ansprüche,
**dadurch gekennzeichnet,** dass in dem vom Isolierkragen (8) begrenzten Teilvolumen (13) wenigstens ein Wärmeleitblech (15) angeordnet ist, das vorzugsweise aus Edelstahl besteht.

6. Vorratstank nach einem der vorhergehenden Ansprüche,
**dadurch gekennzeichnet,** dass in der Bodenfläche (12) des Außenbehälters (2) eine als Sumpf (16) dienende Vertiefung ausgebildet ist und, dass die Entnahmevorrichtung (7) in den Sumpf (16) mündet.

7. Vorratstank nach einem der vorhergehenden Ansprüche,
**dadurch gekennzeichnet,** dass die Entnahmevorrichtung (7) eine Sauglanze ist.

8. Vorratstank nach einem der vorhergehenden Ansprüche,
**dadurch gekennzeichnet,** dass der Innenbehälter (3) über eine Schraub-, Steck-, Klemm- und/oder Rastverbindung lösbar mit dem Außenbehälter (2) verbunden ist, wobei vorzugsweise ein bodenseitig angeordneter, zylinderfömiger Ansatz (17) des Innenbehälters (3) mit einem bodenseitig angeordneten Aufnahmering (18) des Außenbehälters (2) zusammenwirkt.

9. Vorratstank nach einem der vorhergehenden Ansprüche,
**dadurch gekennzeichnet,** dass der Isolierkragen (8) segmentiert ausgebildet ist.

10. Vorratstank nach einem der vorhergehenden Ansprüche,
**dadurch gekennzeichnet,** dass der Außenbehälter (2) im Bodenbereich zumindest teilweise von außen wärmegedämmt ist.

## Claims

1. Reservoir tank for a reducing agent (1), in particular an aqueous urea solution for the aftertreatment of exhaust gases from an internal combustion engine, comprising an outer vessel (2) and a pot-shaped inner vessel (3) which delimits a partial volume (4) of the volume (5) of the outer vessel (2), comprising a heating element (6) which is inserted into the inner vessel (3), and comprising an extraction device (7) for the extraction of the reducing agent (1), **characterized in that** the pot-shaped inner vessel (3) is surrounded, in the base region, by an insulating collar (8) which comprises a first leg (9), which extends to the outer circumferential surface (11) of the inner vessel (3), and a second leg (10), which bears against the base surface (12) of the outer vessel (2), such that the insulating collar (8) delimits a further partial volume (13) of the volume (5) of the outer vessel (2).

2. Reservoir tank according to Claim 1,
**characterized in that** the two partial volumes (4, 13) are fluidically connected via axial and/or radial passages (14).

3. Reservoir tank according to Claim 1 or 2,
**characterized in that** the two partial volumes (4, 13) are centred as viewed in a horizontal direction and are arranged in the vicinity of the base surface (12) of the outer vessel (2) as viewed in a vertical direction.

4. Reservoir tank according to one of the preceding claims,
**characterized in that** the inner vessel (3) and/or the insulating collar (8) are/is composed of a material which has a thermal conductivity of < 0.5 W/(mK), wherein the material is preferably a plastic.

5. Reservoir tank according to one of the preceding claims,
**characterized in that**, in the partial volume (13) delimited by the insulating collar (8), there is arranged at least one heat-conducting plate (15) which is preferably composed of high-grade steel.

6. Reservoir tank according to one of the preceding claims,
**characterized in that** a depression which serves as a sump (16) is formed in the base surface (12) of the outer vessel (2), and **in that** the extraction device (7) issues into the sump (16).

7. Reservoir tank according to one of the preceding claims,
**characterized in that** the extraction device (7) is a suction lance.

8. Reservoir tank according to one of the preceding claims,
**characterized in that** the inner vessel (3) is detachably connected to the outer vessel (2) by means of a screw connection, plug-type connection, clamping connection and/or detent connection, wherein preferably, a cylindrical projection (17), arranged at the base side, of the inner vessel (3) interacts with a receiving ring (18), arranged at the base side, of the outer vessel (2).

9. Reservoir tank according to one of the preceding claims,
**characterized in that** the insulating collar (8) is of segmented form.

10. Reservoir tank according to one of the preceding claims,
**characterized in that** the outer vessel (2) is at least partially thermally insulated on the outside in the base region.

## Revendications

1. Réservoir de stockage pour un agent de réduction (1), en particulier une solution aqueuse d'urée pour le traitement secondaire de gaz d'échappement provenant d'un moteur à combustion interne, comportant un récipient extérieur (2) et un récipient intérieur en forme de pot (3) qui délimite un volume partiel (4) du volume (5) du récipient extérieur (2), un élément de chauffage (6) qui est inséré dans le récipient intérieur (3), et un dispositif de prélèvement (7) pour le prélèvement de l'agent de réduction (1), **caractérisé en ce que** le récipient intérieur en forme de pot (3) est entouré par une collerette d'isolation (8) dans la région du fond, laquelle collerette d'isolation comporte une première branche (9) rapprochée de la surface périphérique extérieure (11) du récipient intérieur (3) et une deuxième branche (10) s'appliquant contre la surface de fond (12) du récipient extérieur (2), de telle sorte que la collerette d'isolation (8) délimite un volume partiel supplémentaire (13) du volume (5) du récipient extérieur (2).

2. Réservoir de stockage selon la revendication 1, **caractérisé en ce que** les deux volumes partiels (4, 13) sont en liaison fluidique par le biais de passages (14) axiaux et/ou radiaux.

3. Réservoir de stockage selon la revendication 1 ou 2,
**caractérisé en ce que** les deux volumes partiels (4, 13) sont disposés de manière centrée dans la direction horizontale et à proximité de la surface de fond (12) du récipient extérieur (2) dans la direction verticale.

4. Réservoir de stockage selon l'une quelconque des revendications précédentes,
**caractérisé en ce que** le réservoir intérieur (3) et/ou la collerette d'isolation (8) est/sont constitué(e)(s) d'un matériau qui présente une conductivité thermique < 0,5 W/(mK), le matériau étant de préférence un plastique.

5. Réservoir de stockage selon l'une quelconque des revendications précédentes,
**caractérisé en ce qu'**au moins une tôle thermoconductrice (15) est disposée dans le volume partiel (13) délimité par la collerette d'isolation (8), laquelle tôle thermoconductrice est constituée de préférence d'acier fin.

6. Réservoir de stockage selon l'une quelconque des revendications précédentes,
**caractérisé en ce qu'**un évidement servant de carter (16) est réalisé dans la surface de fond (12) du récipient extérieur (2), et **en ce que** le dispositif de prélèvement (7) débouche dans le carter (16).

7. Réservoir de stockage selon l'une quelconque des revendications précédentes,
**caractérisé en ce que** le dispositif de prélèvement (7) est une lance d'aspiration.

8. Réservoir de stockage selon l'une quelconque des revendications précédentes,
**caractérisé en ce que** le récipient intérieur (3) est relié de manière amovible au récipient extérieur (2) par le biais d'une liaison par vissage, emboîtement, serrage et/ou encliquetage, une saillie cylindrique (17), disposée du côté du fond, du récipient intérieur (3) coopérant de préférence avec une bague de réception (18), disposée du côté du fond, du récipient extérieur (2).

9. Réservoir de stockage selon l'une quelconque des revendications précédentes,
**caractérisé en ce que** la collerette d'isolation (8) est réalisée de manière segmentée.

10. Réservoir de stockage selon l'une quelconque des revendications précédentes,
**caractérisé en ce que** le récipient extérieur (2) est, dans la région du fond, isolé thermiquement au moins partiellement depuis l'extérieur.
